# EUROPÄISCHE PATENTSCHRIFT

(11) **EP 3 045 825 B1**
(45) Veröffentlichungstag und Bekanntmachung des Hinweises auf die Patenterteilung: **22.04.2026**
(21) Anmeldenummer: 16151622.4
(22) Anmeldetag: 15.01.2016
(51) Int. Cl.: F24D 3/14

(54) **BAUTEIL**
COMPONENT
COMPOSANT

(30) Priorität: 17.01.2015 DE 102015000287
(43) Veröffentlichungstag der Anmeldung: 20.07.2016
(60) Teilanmeldung: 25163332.7
(73) Patentinhaber: P + R GmbH, 87700 Memmingen (DE)
(72) Erfinder: Bühler, Armin, 87733 Markt Rettenbach (DE)
(74) Vertreter: Pfister, Stefan Helmut Ulrich

(56) Entgegenhaltungen:
- EP-A2- 1 235 036
- DE-A1- 102010 014 863
- DE-A1- 2 934 505
- DE-A1- 3 335 191
- DE-U1- 202014 000 931

## Beschreibung

Die Erfindung betrifft ein Gebäude mit einem System für die Temperierung eines Raumes des Gebäudes und zur Speicherung von thermischer Energie, wobei mindestens ein aus festem Material gebildeter Energiespeicher für die Speicherung der thermischen Energie und mindestens ein Flächentemperierelement, das dem zu temperierenden Raum zugewandt ist, für die Temperierung des Raumes vorgesehen ist und das System eine Isolierung aufweist, die den Energiespeicher zumindest teilweise umgibt, wobei der Energiespeicher und das Flächentemperierelement mindestens eine Rohrleitung für die Leitung eines flüssigen oder gasförmigen Mediums aufweist, das dem Transport von thermischer Energie dient, der Energiespeicher eine Fundamentplatte oder ein Deckenelement des Gebäudes ist.

Im Stand der Technik sind zum Beispiel Klimadecken oder thermisch aktivierbare Bauteile bekannt, die mit einem hydraulisch betriebenen Pufferspeicher als Energiespeicher in Verbindung stehen. Aus der DE 10 2010 014 863 ist eine Vorrichtung und ein Verfahren zur Speicherung thermischer Energie bekannt. Sie umfasst eine Beladungseinrichtung, ein Speichermedium, eine Isoliereinrichtung und einen Wärmetauscher. Die Beladungseinrichtung ist dazu eingerichtet ist, dem Speichermedium Wärme zuzuführen und/oder dem Speichermedium Wärme zu entziehen. Die Isoliereinrichtung ist dazu eingerichtet, das Speichermedium gegenüber seiner Umgebung zu isolieren. Der Wärmetauscher ist dazu eingerichtet, einen Wärmeaustausch zwischen dem Speichermedium und seiner Umgebung zu ermöglichen. Das Speichermedium enthält einen Festkörper und bildet zumindest einen Teil einer Innenwand eines Gebäudes. Aus der DE 29 34 505 ist eine abgedämmte Geschoßdecke von Gebäuden oder ein allseitig abgedämmter Estrich als Wärmespeicher bekannt.

Dokument DE 3335191 A1 zeigt ein Gebäude mit einem System für die Temperierung eines Raumes des Gebäudes und zur Speicherung von thermischer Energie mit den Merkmalen des Oberbegriffs von Anspruch 1.

Klimadecken bzw. thermisch aktivierte Bauteile, insbesondere thermisch aktivierte Decken, sind heute in unterschiedlichsten Ausführungsformen bekannt.

Diesen Systemen, häufig unter dem Terminus "Thermische Bauteilaktivierung" oder "Betonkernaktivierung" usw. bekannt, liegt die Idee zugrunde, eine möglichst große Masse im Gebäude relativ gleichmäßig und konstant auf eine einmal definierte und vorgewählte Temperatur zu bringen und zu halten. Über die temperierte Gebäudemasse, insbesondere der Decken, soll der Gebäudeinhalt, der zu temperierende Raum, auf einer vorgegebenen Temperatur, bei mehr oder weniger großer Abweichung, gehalten werden. Dabei liegt der energetische Vorteil in der Abfangung thermischer Spitzenlasten im Heiz-/ wie auch im Kühlfall durch eben die aktivierte Gebäudemasse. Hieraus resultiert, da diese Spitzenlasten abgefangen werden, daß die Anlagen zur Erzeugung der thermischen Energie kleiner ausgebildet und gleichmäßiger betrieben werden können.

Diesem Vorteil steht der Nachteil der schieren Unmöglichkeit zur kurzfristigen Steuerung und Anpassung, ebenfalls begründet in der Aktivierung der Gebäudemasse, gegenüber. Insbesondere bei stark unterschiedlichen Temperaturverläufen, hervorgerufen durch z. B. große Glasflächen und/oder rasch wechselnde Außentemperaturen bzw. solaren Einstrahlungen oder stark wechselnden internen Lasten/Gewinnen macht sich dieser Nachteil bemerkbar. So dass häufig zur Unterstützung zusätzliche freie/integrierte Heizflächen oder/und mit Heiz-/ Kühlregistern ausgestattete Lüftungsanlagen eingesetzt werden müssen. Neben den zusätzlichen Kosten und Bauzeiten wird durch den Betrieb dieser ergänzenden Anlagen ein (Groß-)Teil der energetischen Vorteile, welche in der Masseaktivierung begründet sind, aufgezehrt. Daneben bestehen häufig Einschränkungen in der Behaglichkeit welche durch die mangelnde Regelbarkeit hervorgerufen werden.

Es ist Aufgabe der vorliegenden Erfindung, diesen Stand der Technik zu verbessern.

Zur Lösung dieser Aufgabe schlägt die Erfindung ein Gebäude wie eingangs beschrieben vor, wobei das Material des Flächentemperierelement im Vergleich mit dem Material des Energiespeichers eine um mindestens 60% schlechtere Wärmekapazitätseigenschaft aufweist.

Der Pfiff der Erfindung liegt darin, dass durch die Wahl des Materials des Flächentemperierelement, das im Vergleich mit dem Material des Energiespeichers eine um mindestens 60% schlechtere Wärmekapazitätseigenschaft aufweist, eine Isolierung im Sinne der Erfindung gebildet wird.. Die Erfindung betrifft neben dem mindestens zwei Temperaturzonen umfassenden Speicher-/Entladekonzept mit mindestens einer flinken Temperaturzone (realisiert durch das Flächentemperierelement) und einer trägen Temperaturzone (realisiert durch den aus festem Material gebildeten Energiespeicher), auch Lösungen für Ausführungen in massiver als auch in Trockenbauweise. Somit ist die Erfindung für Massivbau, Neubau, Leichtbau und den z. B. nachträglichen Einbau in Gebäuden geeignet. Ein Wandaufbau mit einem Flächentemperierelement und einem Energiespeicher ist kein Ausführungsbeispiel der Erfindung.

Die flinke Temperaturzone bzw. das Flächentemperierelement zeichnet sich insbesondere dadurch aus, dass in das Flächentemperierelement eingeleitete Energie (zum Beispiel über das Rohrleitungssystem) aufgrund der (gegenüber dem Energiespeicher) deutlich reduzierten Masse in kurze Zeitdauer zu einer merklichen Temperaturänderung in dem zu temperierenden Raum führt.

Die träge Temperaturzone bzw. der Energiespeicher zeichnet sich hiergegen dadurch aus, dass die Zufuhr von thermischer Energie überwiegend oder möglichst ausschließlich nur die Temperatur des Energiespeichers verändert/erhöht und die Umgebung des Energiespeichers, zum Beispiel der Raum, keine Temperaturänderung erfährt.

Im Rahmen dieser Erfindung bzw. Anmeldung gleichwertig zu der Bezeichnung "Temperaturzone" sind folgende Begriffe zu verstehen: thermische Schicht, thermisch getrennte Zone, thermisch getrennte Temperaturzone.

Dabei ist erfindungsgemäß vorgesehen, dass der im System vorgesehene Energiespeicher überwiegend, bevorzugt ausschließlich (soweit physikalisch erreichbar) nur die Aufgabe einer Speicherung der thermischen Energie übernimmt. Der Energiespeicher ist durch eine Isolierung von dem Flächentemperierelement (und somit auch von dem zu beheizenden Raum) thermisch entkoppelt, wodurch die oben beschriebenen Nachteile in überraschend einfacher Weise ausgeschaltet sind!

Die Erfindung sieht unter anderem ein System zum Temperieren des Raumes eines Gebäudes vor. Als Raum im Sinne der Erfindung ist hierbei zum Beispiel ein Wohnraum, ein Arbeitsraum ein Zimmer, eine Halle, ein Saal oder ähnliches zu verstehen.

Erfindungsgemäß ist vorgesehen, dass der Energiespeicher aus einem festen Material gebildet ist. Hierdurch grenzt sich der erfindungsgemäße Vorschlag von hydraulisch betriebenen Pufferspeichern als Energiespeicher ab, bei welchem in einem voluminösen Tank eine Flüssigkeit, oftmals Wasser gelagert wird, das eine entsprechende Temperatur besitzt. Die thermische Energie, die zum Temperieren genutzt wird, wird in diesen Vorschlägen nach dem Stand der Technik in dem Wasser des Pufferspeichers gespeichert, was es notwendig macht, hierzu ein separates Element (einen Tank) im Gebäude zu verbauen. Der erfindungsgemäße Vorschlag hingegen benutzt die im Gebäude sowieso vorhandenen Elemente bzw. Massen, die eine entsprechende Wärmekapazität aufweisen und erreicht so einen doppelten Nutzen dieses Bauteiles, da diese neben statischen Aufgaben, gestalterischen Aufgaben (diese Elemente umschließen Räume) nun auch eine thermische Aufgabe übernehmen. Dem steht nicht entgegen, dass solche Energiespeicher aus festen Material (monolithische Körper, Hybridkörper, Sandwichbauweisen usw.) von gasförmige oder flüssige Medien durchströmt werden, die dazu vorgesehen sind, Wärmeenergie zu transportieren aber nicht im Sinne des Energiespeichers hier auch zu lagern. Als festes Material ist hierbei insbesondere ein Material zu verstehen, dass sich von den anderen beiden grundsätzlichen Phasen von Stoffen (flüssig und gasförmig) unterscheidet und zum Beispiel eine feste Struktur ausbildet.

Die Erfindung schlägt auch den Einsatz eines Flächentemperierelementes vor. Dieses Flächentemperierelementes hat einerseits zum Beispiel Heizaufgabe, andererseits übernimmt es aber auch Kühlaufgaben. Die gewählte Formulierung bedeutet dabei, je nach Nutzung in dem Raum, ein Kühlen oder ein Beheizen des Raumes.

Dabei ist der Begriff Flächentemperierelement sehr variabel zu verstehen: einerseits ist das Flächentemperierelement tatsächlich als gegenüber der Isolierung bzw. dem Energiespeicher durch eine andere Materialwahl abgegrenzt.

Das Flächentemperierelement nimmt dabei eine Rohrleitung bzw. ein Rohrleitungsregister auf, dass für den An- bzw. Abtransport von thermischer Energie sorgt. Das Flächentemperierelement ist insofern aber auch funktional auslegbar, da es persönlich nur eine Wärmetauscherfläche zum Temperieren des Raumes zu Verfügung zu stellen hat, das über andere Mittel erreicht werden kann. Hierbei ist insbesondere daran zu denken, dass das Flächentemperierelement nur von dem, die Rohrleitung unmittelbar umgebenden Bereichen des Bauteils gebildet ist, wobei dann diese Bereich zum Beispiel Teil eine Isolierung (bestehend aus Isoliermaterial) sein kann. Auch eine solche integrierte Ausgestaltung ist ausdrücklich von dieser Erfindung mitumfasst.

Erfindungsgemäß ist auch vorgesehen, daß der Energiespeicher zumindest teilweise von einer Isolierung umgeben ist. Ziel des erfindungsgemäßen Vorschlages ist, eine Trennung zwischen der Speicherung von thermischen Energie einerseits und dem Temperieren (Heizen bzw. Kühlen) des Raumes andererseits zu erreichen. Daher ist die Isolierung des Energiespeichers so vorzusehen, dass möglichst ein ungewollter Energieverlust des Energiespeichers in Richtung des Raumes unterbleibt. Aufgrund der großen trägen Masse des Energiespeichers, der bevorzugt ja ein Element oder Bauteil des Gebäudes ist, und der damit verbundenen hohen thermischen Energie, die in dem Energiespeicher vorgehalten wird, kommt es ohne die Anordnung der Isolierung zu den eingangs beschriebenen Problemen.

Die Isolierung wird daher geschickterweise insbesondere (insbesondere auch möglichst vollständig) zwischen dem Energiespeicher und dem zu temperierenden Raum angeordnet. In einer bevorzugten Variante befindet sich die Isolierung insbesondere zwischen dem Flächentemperierelement und dem Energiespeicher. Wenn der Energiespeicher zum Beispiel als Deckenelement ausgebildet ist, ist eine vollumfängliche Isolierung, also eine allseitige Isolierung des Energiespeichers/Deckenelementes nicht oder nur mit hohen Aufwand möglich, da ja das Deckenelement auf dem Wandelement aufliegt. In diesem Bereich ist dann oftmals keine Isolierung vorgesehen, was aber ebenfalls von dem erfindungsgemäße Vorschlag umfasst ist. Daher umfasst der erfindungsgemäße Vorschlag zum Beispiel auch eine Ausgestaltung der Isolierung in der Art, dass die Oberseite und/oder Unterseite des Energiespeichers/Deckenelementes von einer Isolierung bedeckt ist.

Neben einer thermischen Abtrennung ist in einer Variante des Vorschlages auch vorgesehen, dass die Isolierung auch eine akustische Isolier- oder Dämpfungsaufgabe übernimmt. Es sind Isoliermaterialen bekannt, die neben einer entsprechenden Isoliereigenschaft auch schallabsorbierende bzw. schalldämpfende Eigenschaften aufweisen. Eine solche Ausgestaltung begünstigt die Ausbildung eines angenehmen Raumklimas.

Im Rahmen dieser Erfindung bzw. Anmeldung gleichwertig zu der Bezeichnung "Isolierung" sind folgende Begriffe zu verstehen: thermische Trennschicht, Dämmlage, Dämmschicht, thermisch getrennte Zone.

Der Erfindung liegt die Erkenntnis zugrunde, dass die Ausbildung thermisch getrennter Temperaturzonen in (bevorzugt) einem einzigen thermisch aktivierten Bauteil aber erfindungsgemäß auch in zwei systematisch gleichartig jedoch thermisch getrennten Bauteilen (z. B. Deckenkernaktivierung und Fußboden-, / Deckenheizung bzw. dergleichen mehr) die Möglichkeit der sowohl passiven als auch aktiven thermischen Energiespeicherung, bei gleichzeitig oberflächennaher und flinker Raumtemperierung, bietet. Als erfindungsgemäß vorteilhaft wurde dabei das Zusammenspiel zwischen mindestens einem thermisch träg, speichernd aktiviertem Bauteil und mindestens eines thermisch flink reagierenden Übergabesystems, bevorzugt als Wand-/Decken-/ oder Fußbodenheizung aber auch als freie Heizfläche insbesondere Niedertemperaturheizkörper oder auch Luftübergabesystems ausgebildet, erkannt.

Dies stellt die Grundlage für ein kostengünstiges Energiemanagement im Massivbau (Neubau) und Trockenbau (hier vorwiegend aber nicht ausschließlich in der Sanierung) dar. Ein solches System kann z. B. überschüssige solare Energie während des Tages in dem einem Gebäudeteil (z. B. Südseite oder interne Gewinne) in die Deckenmasse desselben oder/und eines anderen Gebäudeteiles speichern. Die Nutzung der im Kern gespeicherten Energie kann zeitversetzt, passiv durch Wärmeleitung, Abstrahlung und/oder Lüftung oder durch aktive Entladung durch Durchspülen mittels eines flüssigen Mediums (z. B. Wasser) oder dem aktiven Durchströmen von Luft erfolgen.

Gemäß einem Ausführungsbeispiel der Erfindung wurde gefunden, dass selbiges auch im Kühlfall, z. B. durch Ausnutzung niedriger nächtlicher Außentemperaturen möglich und/oder der Nutzung von Überschussstrom z. B. aus regenerativen Energien wie Solar oder Windkraft via Wärmepumpe oder Kältemaschine möglich ist. Aber auch für herkömmliche thermische Solaranlagen und/oder Absorptionswärmepumpen insbesondere unter Nutzung solarer Wärme, bietet die erfinderisch gefundene Lösung ungeahnte Vorteile.

Gemäß einem Ausführungsbeispiel der Erfindung kann mit der gefunden Lösung die Aktivierung der Gebäudemasse und die damit einhergehende Entlastung der Anlagentechnik mit den vorteilhaften Systemtemperaturen von Heiz/Kühldecken nicht nur kombiniert werden. Vielmehr tritt durch die Kombination beider Techniken im jeweiligen System, Bauteil bzw. jedem Bauteil aber auch in einem einzigen Bauteil, eine Leistungssteigerung beider Komponenten ein. Höhere Heiz-/Kühlleistungen und noch bessere passive und/oder aktive Regelbarkeit der oberflächennahen flinken Bauteilaktivierung bei gleichzeitig besserer Ausnutzung des Speichervolumens der Bauteilmasse und deren optimierte thermische Be-/ und Entladung. Zudem schafft die in der Erfindung gefundene Lösung die Möglichkeit der nahezu verlustfreien und platzneutralen Speicherung thermischer Energie.

Gemäß einem Ausführungsbeispiel der Erfindung kann die Trennung der Temperaturzonen sowohl konstruktionsbedingt als auch durch vorhandene bzw. eigens dafür eingesetzte (auch) zusätzliche Baustoffe z. B. Dämmschichten erfolgen.

Gemäß einem Ausführungsbeispiel der Erfindungwird vorgeschlagen, dass in einem Bauteil zwei, zum Beispiel zueinander möglichst effektiv isolierte Temperaturzonen ausgebildet werden. Hierzu Gleichwertiges, und im Sinne dieser Erfindung Äquivalentes wird auch dadurch erreicht, dass sich die Materialien, aus welchem der Energiespeicher bzw. das Flächentemperierelement bestehen, in ihren jeweiligen Wärmeleit- und/oder Wärmekapazitätseigenschaften ausreichend unterscheiden. So kommt es bei dem Energiespeicher auf eine möglichst hohes Energiespeichervermögen, also eine hohe Wärmekapazität an, wohingegen diese Eigenschaft bei dem Flächentemperierelement eher unerwünscht ist, da das Temperieren eines Raumes, besonders das Heizen eines Raumes oftmals schnell und effektiv, möglichst ohne zu große Verluste durch das Aufheizen des Material des Flächentemperierelementes erfolgen soll.

Die Isolierung wird dann gerade im Bereich der jeweiligen schlechten Wärmeleit- und/oder Wärmekapazitätseigenschaften gebildet. Die Isolierung, bzw. der Isolierungseffekt tritt dann gerade im Grenzbereich zwischen dem Energiespeicher und dem Flächentemperierelement auf, bei welchen die jeweiligen Wärmeleit- und/oder Wärmekapazitätseigenschaften sich entsprechend (bevorzugt sprunghaft) verschlechtern. Es sei an dieser Stelle darauf hingewiesen, dass der Begriff "Isolierung" hier nicht als nur als diskretes separates Bauteil zu verstehen ist, sondern natürlich auch eine funktionelle Bedeutung im Sinne dieser Erfindung und Anmeldung hat. Eine Isolierung hat die Aufgabe einen Verlust an Wärmeenergie zu vermeiden, was insbesondere durch eine schlechte Wärmeleiteigenschaft erreicht wird. Der Abfluss von Verlustwärme kann auch durch eine entsprechend schlechte Wärmekapazität in gleicher Weise erreicht werden. Ausdrücklich umfasst daher die Erfindung auch Ausgestaltungen, bei welchen die Isolierung im Material des Flächentemperierelement integriert ausgebildet ist und so das Flächentemperierelement isolierende Aufgaben aufweist oder aber die Isolierung die Aufgabe eines Flächentemperierelementes miterfüllt.

Dabei kann jede Temperaturzone entweder, sowohl regelungstechnisch als auch hydraulisch eigenständig angesteuert werden oder/und hydraulisch parallel bzw. in Reihe in das Gebäudesystem eingebunden sein.

Während die erste Ausführungsvariante ein breiteres Spektrum von Anwendungsmöglichkeiten bietet ist letztere Variante kostentechnisch günstiger. Insbesondere was den Installations- und Regelaufwand betrifft.

Beispielsweise sind Betondecken bekannt bei denen zur Gewichtsreduktion und/oder Entlastung der Statik z.B. Polystyrol (EPS) oder Hartschaum (PUR/PIR) im Deckenkörper verbaut wird. Auch werden entsprechende Dämmschichten zur Schallabsorption in massiven Baukörpern eingesetzt.

Zudem sind, insbesondere aber nicht ausschließlich, zweischalige Wandsysteme z. B. Filigran-Hohlwände mit und ohne innen liegender Dämmung bekannt. Ebenso sind solche Systeme als zweischalige Beton-Hohlkonstruktionen oder auch Röhrensysteme (z. B. Röhrendecken oder Spannbetondecken) bekannt welche vorwiegend als Decken ihren Einsatz finden.

Solche Systeme werden heute bereits als flinke, thermisch aktive Bauteile eingesetzt. Wobei ausschließlich im unteren Deckenspiegel, oberflächennah Rohrleitungen verbaut werden. Durch die Reduktion des Wärmestroms in die über der/den Dämmschicht(en) bzw. dem Hohlraum (den Hohlräumen) angeordneten und meist statisch nötigen Masse können thermisch relativ flink wirkende Systeme erstellt werden.

Daher kann die Erfindung sowohl in Dächern, Decken als auch Wänden oder Bodenplatten und Estrichen (alleine oder in Verbindung mit Decken, Bodenplatten) usw. genutzt werden. Daher sei ausdrücklich darauf hingewiesen, dass wenn in dieser Schrift von Deckenbauteilen bzw. thermisch aktivierten Bauteilen gesprochen wird, alle betreffenden Bauteile, Bauelemente und Bauumschließungsflächen gemeint sind.

Daher umfasst die Erfindung auch ein den Raum eines Gebäudes begrenzendes Bauteil, wobei das Bauteil einen Energiespeicher zur Speicherung von thermischer Energie und ein Flächentemperierelement, das dem zu temperierenden Raum zugewandt ist, aufweist, wobei zwischen dem Energiespeicher und dem Flächentemperierelement eine Isolierung vorgesehen ist, die überwiegend eine thermische Isolierung zwischen Energiespeicher und Flächentemperierelement bildet und das Bauteil ein System, wie hier beschrieben, bildet.

Hierbei ist zu beachten, dass das hier beschriebene Bauteil Energiespeicher und Flächentemperierelement in einem gemeinsamen Bauteil realisiert. Der Systemgedanke, den die Erfindung ebenfalls umfasst, umschließt nicht nur diese Lösung, sondern umfasst auch eine Lösung, bei welchem der Energiespeicher räumlich, auch bezogen auf das Bauteil, getrennt von dem Flächentemperierelement ausgebildet ist. Zum Beispiel wird als Energiespeicher die üblicherweise gegenüber dem Erdreich isolierte Bodenplatte eines Hauses eingesetzt, die gegenüber eine, diesen bedeckenden Estrichschicht zum Beispiel ebenfalls durch eine Dämmung isoliert ist. Hiermit hydraulisch verbunden ist bei diesem System in geeigneter Weise das Flächentemperierelement, das sich zum Beispiel in Räumen des Erdgeschosses oder ersten Stockes des Gebäudes befinden mag. Die Isolierung zwischen Energiespeicher und Flächentemperierelement wird hierbei durch die räumliche Distanz dieser beiden Elemente und der damit nicht möglichen Wärmeleitung, abgesehen von den diese beiden Elemente verbindenden Rohrleitung, gebildet. Anders gesprochen, ist bei einem solchen Anwendungsbereich eine Aufheizung des Raumes durch Verlustwärme des Energiespeichers nicht von Relevanz.

Daher wird bei dem System in vorteilhafter Weise vorgesehen, dass der Energiespeicher die Fundamentplatte, das Deckenelement oder das Wandelement des Gebäudes ist.

Zwischen dem Energiespeicher und dem Flächentemperierelement ist eine Isolierung vorgesehen, die überwiegend eine thermische Isolierung zwischen Energiespeicher und Flächentemperierelement bildet. Überwiegend sei hier verstanden mit einem Flächenanteil der Isolierung an der Fläche in der Zwischenlage zwischen Energiespeicher und Flächentemperierelement von mindestens 50 %, insbesondere mindestens 60%, 70%. 75%, 80%, 85%, 90%, 95% oder 100%.

Hierzu gleichwertig ist auch eine Wahl des Materials des Flächentemperierelement, das im Vergleich mit dem Material des Energiespeichers schlechtere Wärmeleit- und/oder Wärmekapazitätseigenschaften um mindestens 60%,70%. 75%, 80%, 85%, 90%, oder 95% aufweist.

Bei einer bevorzugten Ausgestaltung des Vorschlags ist vorgesehen, dass die Rohrleitung möglichst mittig im Energiespeicher oder am Energiespeicher, insbesondere an seiner Oberfläche angeordnet ist. Bei der ersten Variante dieses Vorschlages wird durch eine möglichst zentral im Energiespeicher angeordnete Rohrleitung ein effektiver Wärmeübergang der Wärme des Wärmeleitmediums, das in der Rohrleitung zirkuliert, in den Energiespeicher (und zurück) erreicht. Eine solche Ausgestaltung bietet sich zum Beispiel an, wenn das Bauteil bzw. das System neu erstellt/gebaut wird und bei der Planung des Bauteiles oder des Elementes des Systems entsprechend Berücksichtigung finden kann. Ein Vorzug der Erfindung ist es aber auch, dass diese Erfindung auch im bestehenden Gebäuden nachgerüstet werden kann, wobei es dann zuzurechnen ist, dass die Rohrleitung am Energiespeicher, insbesondere an seiner Oberfläche angeordnet wird.

Dies ist der zweite Vorschlag des hier präsentierten Vorschlages. Natürlich ist es auch möglich, im Sanierungsfall die Rohrleitung des Energiespeichers in vorher in den Energiespeicher eingebrachte Gräben einzulegen und diese Gräben hernach mit Wärme gut leitenden Vergussmaterial wieder zu schließen.

Hierbei sei auch erwähnt, dass die Lage der Rohrleitungen im Energiespeicher insbesondere in Abhängigkeit der Ausgestaltung der Isolierung bzw. des Materials des Flächentemperierelementes und/oder des Energiespeichers eingestellt werden kann. Da die über die Rohrleitung in den Energiespeicher eingeleitete Wärmeenergie sich im Material des Energiespeichers durch Wärmefluss verteilt, kann auch durch eine etwas außermittige Anordnung, zum Beispiel durch eine entsprechende Anordnung der Rohrleitung im Energiespeicher auf der dem Flächentemperierelement abgewandten Hälfte des Energiespeichers, das Speichervermögen an Wärme im Energiespeicher, bei gleichzeitiger Reduktion des Aufwandes für die Isolierung und geringen Verlusten aus dem Energiespeicher heraus, optimiert werden.

Des Weiteren ist vorgesehen, dass die Rohrleitung im Flächentemperierelement an der dem zu temperierenden Raum zugewandten Oberfläche angeordnet ist.

Ziel der Ausgestaltung des Flächentemperierelementes ist, dass diese möglichst flink, d.h. mit kurzen Reaktionszeiten in der Lage ist, den Raum zu temperieren, also zu kühlen oder zu heizen. Daher ist es ein Ziel der Ausgestaltung des Flächentemperierelementes, die Wärmeenergie, die in dieses transportiert wird, möglichst effizient und schnell dem zu temperierenden Raum zuzuführen, was durch eine entsprechende Anordnung der Rohrleitung im Flächentemperierelement erreicht wird. Eine weitere Maßnahme liegt darin, das Flächentemperierelement aus Material mit geringer Wärmekapazität oder und/oder isolierenden Eigenschaften auszugestalten, um so mögliche Verlustwege, die dem Ziel einer schnellen und effektiven Energienutzung zuwiderläuft, zu vermeiden.

Es ist klar, dass die beschriebene Rohrleitung Teil eines Rohrleitungsregister ist, die natürlich auch zum Beispiel in mehreren Windungen in dem Flächentemperierelement (analog natürlich auch bei der Ausgestaltung im Energiespeicher) verlegt ist. Natürlich können auch jeweils mehrere, untereinander auch unabhängige Rohrleitungen im Flächentemperierelement/Energiespeicher vorgesehen sein.

Hierbei ist insbesondere vorgesehen, dass der Energiespeicher eine erste Rohrleitung für ein flüssiges Medium und eine zweite Rohrleitung für ein gasförmiges Medium aufweist.

Die Durchmesser der ersten und zweiten Rohrleitung sind dabei nicht zwingend identisch, sondern können einander unterscheiden. So ist der Durchmesser der Rohrleitung für gasförmiges Medium zum Beispiel größer ist wie der Durchmesser der Rohrleitung für das flüssige Medium. Durch die unterschiedlichen eingesetzten Medien kann der Benutzer die zur Verfügung gestellte Wärme des Energiespeichers schnell und in unterschiedlicher Weise nutzen. Die erwärmte Luft kann zum Beispiel als Prozesswärme, zum Beispiel zum Trocknen oder ähnlichem verwendet werden wohingegen mit der hydraulischen Leitung ein Flächentemperierelement, zum Beispiel eine Flächenheizung angesteuert wird.

In einer vorteilhaften Ausgestaltung ist vorgesehen, dass das System zwei Flächentemperierelemente aufweist und der Energiespeicher zwischen den beiden Flächentemperierelementen angeordnet ist. Geschickterweise ist eine Isolierung des Energiespeichers vorgesehen. Somit befindet sich der Energiespeicher (möglichst) thermisch getrennt von den beiden Flächentemperierelement in der nächsten Umgebung die zum Beispiel für die Beheizung von unterschiedlichen Räumen, insbesondere auch in unterschiedlicher Weise angesteuert werden können. Geschickterweise ist dabei ein solches System in einem Bauteil, zum Beispiel einem Hybrid- oder Kompaktbauteil realisiert, das als monolithisches oder aus monolithischen Elementen (zum Beispiel im Sinne eines Sandwichbauteiles) bestehendes Bauteil ausgeführt ist.

Geschickter Weise ist vorgesehen, dass die Isolierung zwischen Flächentemperierelement und Energiespeicher angeordnet ist. Durch diesen Vorschlag entsteht einerseits eine effektive und andererseits auch eine kompaktbauend Variante. Überwiegend sei hier verstanden mit einem Flächenanteil der Isolierung an der Fläche in der Zwischenlage zwischen Energiespeicher und Flächentemperierelement von mindestens 50 %, insbesondere mindestens 60%, 70%, 75%, 80%, 85%, 90%, 95% oder 100%.

In einer weiteren bevorzugten Ausführungsform ist vorgesehen, dass die Isolierung gebildet ist von einer Lage von Isoliermaterial und/oder Wärmestrahlung reflektierendem Material bzw. Folienmaterial. Als Isoliermaterial sind die bekannten Materialien wie Polyurethan oder Polystyrol usw. einsetzbar. Es sind aber auch Wärmestrahlen reflektierende Folien oder Materialien bekannt, die einen ähnlichen Effekt haben. Auch diese Materialen sind hier einsetzbar. Natürlich sind auch entsprechende Kombinationen zur Steigerung des Effektes möglich.

Des Weiteren ist günstiger Weise vorgesehen, dass die Isolierung in dem Flächentemperierelementen integriert ausgebildet ist. Es wurde bereits auf diesen Vorzug der Erfindung hingewiesen. Die Erfindung umfasst auch Ausgestaltungen, bei welchen die Isolierung im Material des Flächentemperierelement integriert ausgebildet ist und so das Flächentemperierelement isolierende Aufgaben aufweist oder aber die Isolierung die Aufgabe eines Flächentemperierelementes miterfüllt, also die Isolierung die Aufgabe der Flächentemperierung integriert mit erfüllt.

Dabei ist es insbesondere von Vorteil, dass es im Flächentemperierelement nicht auf gute Wärmekapazitätoder Wärmeleiteigenschaften ankommt, Wärme soll nämlich effektiv an/von dem Raum abgegeben oder aufgenommen werden, weshalb diese beiden Funktionen Isolierung und Flächentemperierelement integriert ausbildbar sind.

Insbesondere ist hierbei vorgesehen, dass die Isolierung gebildet ist von einem Material des Flächentemperierelementes das schlechtere Wärmeleiteigenschaften und/oder Wärmekapazitätseigenschaften als das Material des Energiespeichers aufweist. So ist zum Beispiel vorgesehen, das Flächentemperierelement aus Leichtbeton oder Isolierbeton zu gestalten welches dann gegenüber dem Material des Energiespeichers als Isolierung wirkt und in dieses dann die Rohrleitung, bevorzugt oberflächennah, einzubetten.

Ein weiterer Aspekt der Erfindung umfasst auch den Vorschlag, dass die zwei Rohrleitungen in Materialen mit jeweils thermisch unterschiedlichen Eigenschaften eingebettet sind. In dieser einfachsten Variante wird durch die erhebliche Verschlechterung der Wärmeleit-bzw. Wärmekapazitätseigenschaften zwischen den beiden Zonen die Isolierung im Sinne der Erfindung realisiert.

Des Weiteren umfasst der Anmeldung auch eine Ausgestaltung bei welchem in einem Mager-, Leicht- oder Isolierbeton mindestens eine Rohrleitung eingebettet ist und so das Flächentemperierelement ausbildet, wobei es bei dieser Varianten auf die Anordnung einer Rohrleitung im darüber liegenden Deckenelement nicht ankommt. Es ist gefunden worden, dass die Funktion des Flächentemperierelement d.h. eine möglichst gleichmäßige Wärmestrahlungsabgabe auch bei Ausgestaltungen des Flächentemperierelement erreicht werden, bei welchen das Material des Flächentemperierelementes eigentlich gut oder sogar sehr gut isolierend sind. Es bildet sich dann unterhalb des Flächentemperierelement eine gleichmäßig erwärmte Luftschicht aus, die eine homogene Abstrahlung der Wärme bewirkt bzw. einen Wärmetransport in der Oberfläche des Flächentemperierelementes bewirkt. Der Anmelder behält es sich vor, genau für diesen Gegenstand im Rahmen einer Teilanmeldung separaten Schutz zu suchen.

Vorteilhafter Weise ist vorgesehen, dass die Isolierung gebildet ist von mindestens einem Stein, insbesondere Baustein mit schlechteren Wärmeleiteigenschaften und/oder Wärmekapazitätseigenschaften als dem Material des Energiespeichers. Der erfindungsgemäße Vorschlag umfasst eine große Vielzahl von verschiedenen Realisierungsvariante. Neben als Betondecken realisierten Bauteile ist es auch möglich, das System in einer Stahl-Stein-Decke oder -Bauteil zu realisieren, wobei dann der eingesetzte Stein bzw. Baustein die Isolierung. Bei der vorgeschlagenen Ausgestaltung übernimmt.

Des Weiteren ist in dem Vorschlag vorteilhafter Weise vorgesehen, dass als Energiespeicher ein am Gebäude bestehendes Element, zum Beispiel eine Decke oder ein Boden dient, auf oder in dem Element eine Rohrleitung bevorzugt mit mindestens einem vom Element getragenen Befestigungsteil angeordnet ist und die Isolierung zwischen Energiespeicher und Flächentemperierelement angeordnet ist. Dieser Vorschlag beschreibt den Sanierungs- oder Nachrüstfall. Wie bereits ausgeführt ist der erfindungsgemäße Vorschlag nicht auf eine Neuerstellung beschränkt, sondern das vorgeschlagene System ist auch an Elementen im Bestand von Gebäuden integriert einsetz- und realisierbar. Dabei wird das Element des Bestandes (Decke) zu einem Energiespeicher aufgerüstet, wozu mindestens eine Rohrleitung anzuordnen ist. Wie bereits ausgeführt ist dann das Flächentemperierelement anzuordnen, was integriert die Isolierung aufweisen kann, oder die Isolierung ist als diskretes, eigenes Bauelement ausgestaltet. Für die Befestigung des Flächentemperierelement ist dabei ein (oder mehrere) Befestigungsteil/e vorgesehen, dass zum Beispiel eine punktweise Befestigung erlaubt oder aber es ist als Profil ausgebildet, das eine linienmäßige Befestigung vorsieht. Das Befestigungsteil ist dabei so auszubilden, dass es die statischen Anforderungen entsprechend erfüllt. Das Befestigungsteil ist durch zusätzliche isoliere Maßnahmen (zum Beispiel Montage über ein Isolierstück) am Energiespeicher thermisch zu entkoppeln.

Bei einer bevorzugten Ausgestaltung des Vorschlags ist vorgesehen, dass das Befestigungsteil auch dazu dient, das Flächentemperierelement und/oder die Isolierung zu tragen bzw. zu halten. Durch einen solchen Aufbau wird die Montage erheblich erleichtert. Zum Beispiel ist es möglich, dass das Flächentemperierelement als abgehängte Decke realisiert wird.

Des Weiteren ist vorgesehen, dass das Befestigungsteil auch einen Installationskanal oder eine Rohrleitung trägt bzw. ausbildet, insbesondere einstückig oder integriert ausbildet. Mit einem solchen Vorschlag wird die Montage noch weiter erleichtert, da das Befestigungsteil dann eine Doppelfunktion übernimmt. Neben einer Befestigung des Flächentemperiertelementes stellt das Befestigungsteil dann auch zum Beispiel die Rohrleitung zur Verfügung, die zur Be- bzw. Entladung des Energiespeichers vorgesehen ist. Des Weiteren ist an dem Befestigungsteil auch ein Installationskanal vorsehbar, der zum Beispiel zur Aufnahme von Elektroleitungen oder ähnlichen dient. Eine integrierte Ausbildung ist zum Beispiel als aus mehreren Teilen bestehend, aber zu einer Einheit vormontiert zu verstehen.

In einer vorteilhaften Ausgestaltung ist vorgesehen, dass die Isolierung als Befestigungsteil dient. Es sind dem Materialien bekannt, die in gewisser Weise statisch belastbar sind. Bei einer solchen Ausgestaltung ist es zum Beispiel möglich, die Isolierung als vorkonfektioniertes Bauteil auszugestalten, das zum Beispiel Aufnahmenuten für die Aufnahme der Rohrleitungen aufweist oder gegebenenfalls diese bereits vormontiert eingelegt sind. Geschickterweise ist dann auf der Ober- und Unterseite der plattenartigen Isolierung die Rohrrohrleitung bzw. das Rohrleitungsregister vorgesehen.

Geschickter Weise ist vorgesehen, dass das Bauteil insbesondere als Halbfertigteil, Fertigteil, Betonfertigteil, Spannbetonfertigteil, als Filigranbauteil bzw. Filigrandeckenbauteil, als Ortbetonteil, als Stahl-Stein-Bauteil oder als Stahl-Stein-Beton-Bauteil ausgebildet ist. Der Vorschlag ist in einer sehr breiten Weise realisierbar und nicht auf eine spezielle Herstellungsform beschränkt. Der Erfindung ist daher den jeweiligen bauseitigen Gegebenheiten optimal anpassbar und, je nach Grad der Vorfertigung, auch sehr kostengünstig herstellbar. Es ist klar, dass Halbfertig- oder Filigranbauweisen mit Ortbeton komplettiert werden und so das Bauteil, wie beschrieben bilden.

In einer weiteren bevorzugten Ausführungsform ist vorgesehen, dass das Bauteil von einem monolithischen Körper gebildet ist, der sowohl den Energiespeicher als auch das Flächentemperierelement und die Isolierung aufnimmt. Als monolithische Körper im Sinne dieser Erfindung ist hierbei ein Bauteil zu verstehen, das einstückig ausgebildet ist, gegebenenfalls aber auch aus unterschiedlichen Materialien über eine Verbundbauweise realisierbar ist, oder zum Beispiel in einem Herstellungsprozess gegossen wurde. Als monolithische Körper im Sinne dieser Erfindung wird auch ein Körper verstanden, der aus mehreren, d.h. mindestens zwei verschiedenen, für sich selber je einstückig hergestellten Bauteile besteht, der hernach mit entsprechenden Verbindungsmitteln wie Schrauben, Anker, Kleber oder ähnliches miteinander verbunden werden. Dem Begriff monolithischen Körper steht auch nicht entgegen, dass ein solcher Körper Isolationsmaterial als Bahnware aufnimmt.

Des Weiteren ist günstiger Weise vorgesehen, dass die Isolierung gebildet ist von im Körper angeordneten Verdrängungskörpern. Der Einsatz der vorgeschlagenen Verdrängungskörpern eröffnet eine überraschend einfache Realisierungsmöglichkeit. Die Verwendung von Verdrängungskörpern ist im Bauwesen eigentlich bekannt, da diese in Betonfertigteile eingebaut werden, um den Verbrauch von Beton im Fertigteil zu reduzieren und somit auch die Masse des Fertigteiles abzusenken. Natürlich werden solche Verdrängungskörper nur dann eingesetzt, wenn dies statisch möglich ist. Im vorliegenden Fall allerdings haben diese Verdrängungskörper noch eine weitere Funktion, denn Sie umschließen einen Luftraum, der als Isolierung wirkt und in diesem Bereich natürlich einen Wärmetransport behindert und die Wärmekapazität reduziert. Insbesondere ist es aber mit seinem solchen Verdrängungskörper möglich, das Bauteil aus einem Stück zu gießen, d.h. der Bereich des Flächentemperierelement und der Bereich des Energiespeichers sind materialgleich und durch die Schicht von oder Anordnung einzelner Verdrängungskörper ausreichend thermisch entkoppelt.

Gemäß einem Ausführungsbeispiel der Erfindung wird nun über der/den Dämmschicht(en) bzw. dem Hohlraum (den Hohlräumen) ein z. B. zweites Rohrsystem verbaut. Dadurch lässt sich die hier, in der Regel ohnehin aus statischen Gründen, zur Verfügung stehende Deckenmasse ebenfalls thermisch nutzen.

In einer weiteren, Ausführung bildet das obere Rohrsystem mit dem unteren Rohrsystem einen einzigen hydraulischen Kreis (Einrohrsystem). Hierdurch können auch z. B. zwei oder mehrere unterschiedliche Rohrdimensionen verwendet werden. Dadurch lassen sich unterschiedliche Verlegeabstände realisieren bzw. unterschiedlich große Flächen hydraulisch relativ einfach zusammenschließen.

Ein solches "Einrohrsystem" lässt sich kostengünstig umsetzen da ein zweiter thermischer Strang samt Umwälzpumpen, Mischern usw. entfällt. Die unterschiedlichen Temperaturzonen bilden sich dann aus dem rechnerisch zu bestimmenden Delta zwischen Vorlauf und Rücklauf.

Gemäß einem Ausführungsbeispiel der Erfindung werden die Rohrsysteme bevorzugt mit Flüssigkeiten wie z.B. Wasser durchströmt. Aber auch andere Medien wie Frostschutzmittel, Kältemittel oder Luft bzw. Kombinationen daraus sind denkbar.

Bei regelungstechnisch und/oder hydraulisch eigenständig angesteuerten Rohrsystemen werden die unterschiedlichen Temperaturzonen über z. B. einen doppelten Wasserkreislauf ausgebildet. Es wurde als vorteilhaft gefunden, wenn beide Systeme zusätzlich über eine "hydraulische Weiche" verfügen. In dieser erfindungsmäßigen Ausführungsvariante lässt sich das oberflächennahe primär der Raumtemperierung genutzte System gänzlich unabhängig von dem vorwiegend der Energiespeicherung dienendem System steuern und bedienen.

Es wurde gefunden, dass die Leistungsfähigkeit des Systems sowohl in Bezug auf die flinke Be-/ und Entladung des Massespeichers als auch bezogen auf die raumseitige Heiz-/Kühlleistung durch ein zusätzliches, luftführendes System im Deckenspiegel deutlich gesteigert werden kann. Dies lässt sich mittels durch den z. B. Beton (-kern) geführte Röhren in die z. B. herkömmliche Rohrlüfter eingesetzt werden, ausführen. Insbesondere bei Röhrendecken oder Spanndielen bietet sich diese Technik der zusätzlichen Be-/ Entladung mittels Luftstrom an. Die Leistungssteigerung welche raumseitig erfolgt ist, ist insbesondere im Kühlfall, erheblich und ermöglicht eine deutliche Verkleinerung der Kälteanlagen. Mittels dieser Lösung lässt sich die Speichermasse nicht nur zeit-/ und bedarfsorientiert nutzen, sondern damit einhergehend auch die Heiz-/Kühlleistung förmlich zuschalten OHNE unmittelbar die Anlagentechnik zu belasten.

Eine weitere, im Sinne des multifunktionalen Systems, vorteilhafte Lösung besteht in der Entfeuchtung der Raumluft mittels des zuvor beschriebenen Luft-Rohrsystems. Dabei verfügt der Baukörper unterhalb der luftführenden Rohre über eine poröse Oberfläche. Über diese, welche zusätzlich als akustisch wirksamer Absorber dienen kann, wird ein Luftstrom unterhalb des Taupunktes geführt der die darin aus dem Raum aufgenommene Feuchte abtransportiert. Der Effekt der Entfeuchtung lässt sich auch erreichen, wenn die poröse Oberfläche selbst, z.B. mittels Kühlmedium durchströmter Leitungen, unter den Taupunkt gekühlt und die anfallende Feuchte mittels des dahinter geführten Luftstroms abgetrocknet und abgeführt wird. Dabei kann dieser Luftstrom zur Erhöhung der Feuchteaufnahme, etwas erwärmt sein. Zusätzlich zur oben beschriebenen Be-/Entladung des Deckenkörpers lässt sich in dieser gefundenen Lösung die adiabate Kühlung durch Verdunsten leistungssteigernd nutzen.

Eine weitere Lösung wird in dem Aufbringen eines thermisch aktivierten (Nass-/ Trocken- /Verbund-) Estrichs oder eines einfachem aufgelegten Rohrsystems als, je nach Bauform flinke oder träge Komponente, auf z. B. eine Röhrendecke gesehen bei der, der untere Deckenspiegel ebenfalls systembedingt flink bzw. träge ausgebildet wird. Als besonders vorteilhaft wurde gefunden die Deckenunterseite thermisch flink, dagegen die Oberseite thermisch träge auszubilden. Dabei wird als vorteilhaft gefunden, wenn das oben aufgebrachte System, z. B. mittels herkömmlich "schwimmendem Estrich" thermisch vom Deckenkörper getrennt wird.

Eine weitere bevorzugte Variante ist die Erstellung der multifunktionalen Decke in örtlicher Bauweise. Dabei wurde erfinderisch als vorteilhaft gefunden, dass heute herkömmlich verwendete oberflächennahe Rohrsystem mit einem Leichtbeton mit geringer(er) Wärmeleitfähigkeit zu übergießen. In einem z. B. zweiten Betonierschritt wird dann der Druckbeton als klassischer Schwerbeton ausgeführt. In diese zweite Betonschicht wird das Speicherrohrsystem eingebaut.

Diese Herstellungsvariante kann ebenfalls für die Produktion von vorgefertigten (Halb-) Fertigteilen eingesetzt werden.

Zudem wurde gefunden, dass die thermische Trennung der beiden Temperaturzonen bauseits durch vor Ort eingelegte Isolierschichten aus bekannten und dem Markt zur Verfügung stehenden Materialien erfolgen kann.

Der bedeutendste Teil der Gebäudeenergie wird Bestandsgebäuden zugeführt. Jeder auch noch so gut konzipierte Neubau wird einen zusätzlichen Energiebedarf durch Erstellung und Betrieb indizieren.

Diesem Umstand soll die Erfindung ebenfalls Rechnung tragen. Es wird daher erstmals eine Lösung aufgezeigt wie die z. B. Deckenmasse im Gebäudebestand, thermisch aktiviert werden kann.

Es wird dazu die Deckenunterseite mit einem Rohrsystem und speziellen Wärmeleitprofilen versehen. In diesen Wärmeleitprofilen lassen sich herkömmliche, drucksteife Abhänger befestigen welche wiederum eine untergehängte Heiz-/Kühldecke in Trockenbauweise oder entsprechende Heiz-/Kühlsegel tragen. In einer vorteilhaften Ausführung wird zwischen die beiden Rohrsysteme eine Dämmschicht angeordnet.

Gemäß einem Ausführungsbeispiel der Erfindung wurde auch gefunden, dass das gesamte untergebaute System z. B. werkseitig vorgefertigt werden kann. Dies kann erfinderisch vorteilhaft z. B. dergestalt erfolgen, dass eine Dämmplatte aus bekanntem, marktüblichem Baustoff oder aber auch akustisch wirksamen Material, beidseitig mit Rohren, wie oben beschrieben, belegt werden kann. Dieses vorgefertigte Element lässt sich mit herkömmlichen und dem Markt zur Verfügung stehenden Befestigungsmitteln an der Decke befestigen.

In einer weiteren gefundenen Lösung ist die verwendete thermische Trennschicht (zusätzlich) feuchteabsorbierend und das dem Raum zugewandte finnisch diffusionsoffen. Somit lässt sich ein taupunktsicheres System darstellen welches, je nach Ausprägung, kurzeitige Taupunktunterschreitungen toleriert. Es können dabei als Dämmschicht bekannte Stoffe wie z. B. Kalziumsilicat, Lehmbauplatten, Holzwerkstoffe, Kork, diverse Kunststoffe usw. eingesetzt werden. Das Finnisch lässt sich ebenfalls kostengünstig aus bekannten Stoffen wie z. B. Marmormehl, Lehm, Kalk usw. herstellen.

Gemäß einem Ausführungsbeispiel der Erfindung wurde es als vorteilhaft erkannt das Trockenbausystem welches wie vor beschrieben, aus Profilen oder Elementen bzw. einer Kombination daraus gefertigt sein kann, wie oben beschrieben hydraulisch einzubinden oder/und mit zusätzlichen luftgeführten Röhren zur Leistungssteigerung, Be-/ Entladung oder/und Entfeuchtung auszustatten.

In diesem Zusammenhang wird insbesondere darauf hingewiesen, dass alle im Bezug auf das System beschriebenen Merkmale und Eigenschaften aber auch Verfahrensweisen sinngemäß auch bezüglich der Formulierung des erfindungsgemäßen Bauteiles übertragbar und im Sinne der Erfindung einsetzbar und als mitoffenbart gelten. Gleiches gilt auch in umgekehrter Richtung, das bedeutet, nur im Bezug auf das Bauteil genannte, bauliche also vorrichtungsgemäße Merkmale können auch im Rahmen der Vorrichtungsansprüche des Systems berücksichtigt und beansprucht werden und zählen ebenfalls zur Offenbarung.

Des Weiteren umfasst die Erfindung auch die Verwendung des Bauteils für die Speicherung von thermischer Energie und gleichzeitig der Zurverfügungstellung eines Flächentemperierelementes.

In der Zeichnung ist die Erfindung insbesondere in einem Ausführungsbeispiel schematisch dargestellt. Es zeigen:

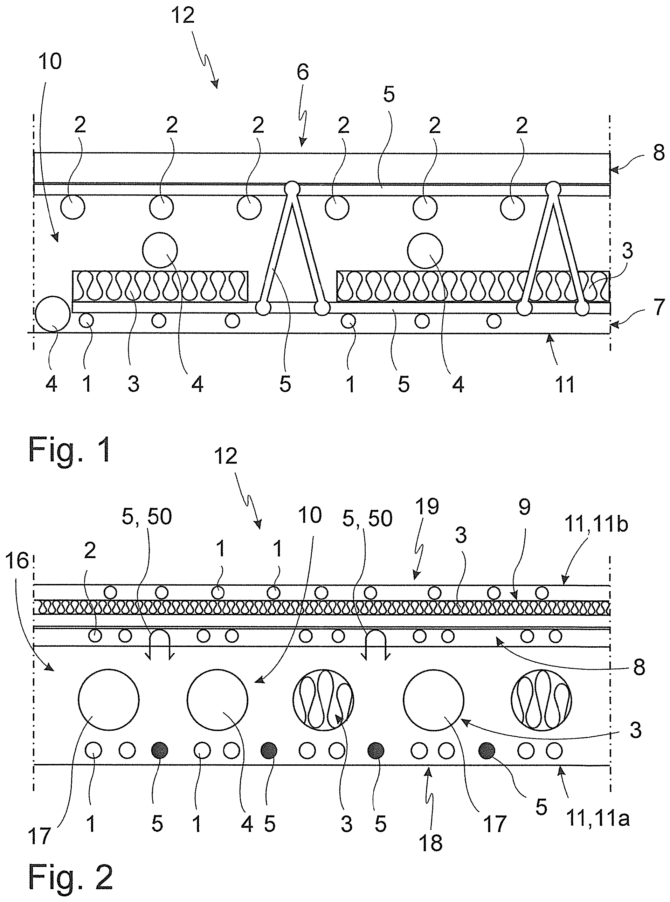

Fig. 1 bis Fig. 7: je in einer Ansicht verschieden Varianten des erfindungsgemäßen Bauteils

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Figur 1 zeigt ein exemplarisch, erfindungsgemäßes Bauteil mit mindestens zwei Temperaturzonen die teilweise, gänzlich durch eine Dämmschicht aus bekannten Materialien getrennt ist. Folgende Bezugszeichen werden dabei verwendet:

Oberflächennahes Rohrsystem. Hier als "flinkes" System dargestellt
1:Rohrsystem zur Energiespeicherung im "trägen" Teil der Decke.
2:Trennlage
3:Alternativ / optional verwendetes Rohr zur Luftführung
4:Statisch notwendige Bewehrung
5:Betondecke als (Halb-) Fertigteil oder örtlich hergestellt (Ortbeton)
6:Unterer Betonspiegel der Betondecke (6), nimmt/bildet Flächentemperierelement (11)
7:Oberer Betonspiegel der Betondecke (6) nimmt/bildet
10:Energiespeicher
11:Flächentemperierelement
12:System gemäß Erfindung

In dem hier gezeigten Ausführungsbeispiel befinden sich die Rohrleitung (1) des Flächentemperierelement (11) unterhalb der Bewehrung (5), insbesondere nahe der dem Raum zugewandten Oberfläche. Hingegen befinden sich die Rohrleitung (2) des Energiespeichers (10) zwischen den Bewehrungsstäben (5) bzw. unterhalb des obersten, parallel zur Oberfläche des Bauteiles verlaufenden Bewehrungsstabes (5) und somit im Inneren des Bauteiles. Mit dem Bezugszeichen (4) sind insbesondere Rohrleitungen oder Rohrleitungsabschnitte mit größerem Durchmesser gezeigt, die der Luftführung dienen können. Die Trennlage bzw. Isolierung (3) ist, wie deutlich zu sehen ist, zwischen dem Energiespeicher (10) und der im Flächentemperierelement (11) fast durchgehend angeordnet, sie ist im Bereich der Bewehrung (5) ausgespart, um die Montage und den Aufbau des Bauteils zu erleichtern, ohne aber damit der erfindungsgemäßen Effekt merklich zu reduzieren, da doch noch der überwiegende flächenmäßige Bereich zwischen dem Energiespeicher (10) und dem Flächentemperierelement (11) durch die Trennlage bzw. Isolierung (3) voneinander thermisch getrennt sind.

Figur 2 zeigt ein weiteres, exemplarisch, erfindungsgemäßes Bauteil mit mindestens zwei Temperaturzonen die, hier beispielhaft dargestellt, konstruktiv getrennt hergestellt sind. Darüber angeordnet, in einer weiteren / ergänzenden Variante, eine dritte, in einer Fußbodenheizung eingebaute dritte Temperaturzone (zum Bilden einer zweiten Flächentemperierelement (11b) zum Entladen des Speicherkerns/Energiespeichers (10). Dabei wurde der Speicherkern/Energiespeichers (10), hier beispielhaft dargestellt, vom darüber liegenden Raum durch die ohnehin nötige Dämmung (3) des schwimmenden Estrichs vom eigentlich zu beheizenden Raumvolumen getrennt wurde. Das Bauteil ist als BetonRöhren-, bzw. Bubbledecke als (Halb-) Fertigteil oder örtlich hergestellt (Ortbeton). Sie ist dargestellt mit leeren/bzw. Dämmmaterial (7) gefüllten Röhren/Bubbles (4), die auch als Verdrängungskörper (17) bezeichnet werden oder wirken. Es beschreiben:
1: Oberflächennahes Rohrsystem. Hier als "flinkes" System in Flächentemperierelement (11a) der Deckenoberfläche (18) und in Flächentemperierelement (11b) des Fußbodens (19) dargestellt
2: Rohrsystem zur Energiespeicherung/Transport im "trägen" Teil der Decke, dem Energiespeicher (10). Durch oberseitige, nicht mittigem Beladung, mittels aufgelegtem Rohrsystem (2).
3: Beispielhaft, auch konstruktiv, dargestellte Trennlage/n
4: Röhre/Bubble zur Betonverdrängung. Hier auch dargestellt mit Trennlage/Isolierung (3) gefüllt und/oder als weitere zweite unabhängige Rohrleitung (4) zum zusätzlichen Speichern, Entladen, Leistungsteigern der Decke, nutzbar gemacht. Allein schon die die Anordnung der Rohrleitung (4) oder der Verdrängungskörper (17) (diese sind zum Beispiel allseitig geschlossene oder gefüllte Profilstücke) wirken bereits als Isolierung (3).
5: Statisch notwendige Bewehrung,
50: Klammern für Verbundestrich (8) oder/und Schubanker zur Ausbildung einer statischen Einheit zwischen Verbundestrich (8) und Energiespeicher (10).
8: Aufbeton Beton (mit/ohne statischer Funktion), oder Verbundestrich. Jeweils örtlich oder werkseitig auf das Bauteil aufgebracht, um insbesondere einen monolithischen Körper (16) zu bilden. Diese Lage nimmt auch die Rohrleitung (2) des Energiespeichers (10) auf.
9: Schwimmender Estrich mit thermischer Trennlage (3) und Fußbodenheizung als Flächentemperierelement (11b)

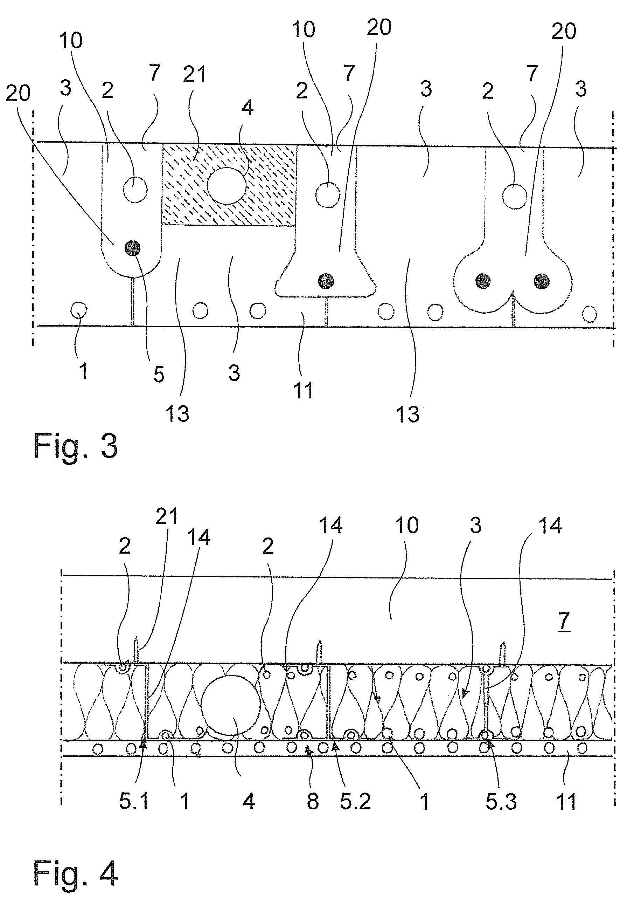

Figur 3 zeigt einen weiteren Lösungsvorschlag für ein Massivbauteil (örtlich/werkseitig vorgefertigt) als Stahl-/Steindecke, als (Halb-) Fertigteil oder örtlich erstellt. Es beschreiben:
1: Oberflächennahes Rohrsystem. Hier als "flinkes" System, beispielhaft ohne weitere Entlade-Temperaturzonen dargestellt welche jedoch wie oben gezeigt möglich sind.
2: Rohrsystem zur Energiespeicherung im "trägen" Teil der Decke.
3: Trennlage, hier beispielhaft konstruktiv durch einen Stein (Ziegel z.B.) dargestellt
4: Alternativ / optional, verwendetes Rohr zur Luftführung. Hier beispielhaft im Aufbeton/Vergussbeton eingebettet.
5: Statisch notwendige Bewehrung
7: Fugen-/Vergussbeton

Der Aufbau des in Figur 3 gezeigten Bauteils erfolgt so, dass zunächst eine Reihe von Bausteinen 13, dies können zum Beispiel Ziegel- oder Betonbausteine sein, auf einer Unterlage aufgestellt werden, die je eine entsprechende, sich nach oben ausbildende Verjüngung besitzen. Dadurch bilden benachbart anliegende Bausteine zwischen sich Mulden 20, die je nach Ausgestaltung der Bausteine 13 unterschiedlich sind. Diese Mulden 20 werden mit einer Bewehrung 5 ausgelegt und dann mit Vergussbeton 7 ausgegossen, wodurch sich hier der Energiespeicher 10, in Längsrichtung in verschiedene Teilspeicher aufgeteilt, bildet.

Natürlich ist in jedem Energiespeicher 10 eine Rohrleitung 2 für den An - und Abtransport der Wärmeenergie vorgesehen. Die Bausteine 13 erstrecken sich nicht grundsätzlich über die gesamte Bauteilhöhe, sondern sind nur im unteren Bereich angeordnet. Die Bausteine 13 tragen an ihrem unteren Ende ebenfalls eine Rohrleitung 1, und bilden in diesem Bereich, dem Raum zugewandt, das Flächentemperierelement 11. Geschickterweise ist hierbei der Baustein 13 nicht nur das Element, das das Flächentemperierelement 11 bildet, sondern auch gleichzeitig die Isolierung 3. Dies wird dadurch erreicht, dass die Wärmeleit-bzw. Wärmekapazitätseigenschaft des Bausteins 13 signifikant schlechter ist als das Material des Energiespeichers 10. Dies ist auch der Grund, warum sich der Baustein 13 nicht über die gesamte Höhe des Bauteils erstreckt, sondern im oberen Bereich durch die Vergussmenge 21 vergossen ist, die dann ihrerseits auch die Möglichkeit eröffnet, eine zweite Rohrleitung 4 einzubetten.

Natürlich ist es möglich, dem Baustein 13, wie im rechten Bereich gezeigt, in der Höhe des Bauteiles auszubilden, hier kann dann nur eine geringere Wärmeenergie gespeichert werden wie zum Beispiel in einem Energiespeicher 10, der überwiegend aus mit Beton verfüllten Mulden 20 und den dazwischen angeordneten Vergussmaterialien 21 gebildet ist.

Figur 4 zeigt eine weitere Lösung der Erfindung eines multifunktionalen Bauteils, hier als Trockenbaulösung zum nachträglichen Einbau (z.B., aber nicht nur, bei Sanierungen oder Leichtbauten) dargestellt. Es beschreiben:
1: Oberflächennahes Rohrsystem des Flächentemperierelementes 11. Hier beispielhaft in ein Profilsystem, bzw. in die Trennlage, bzw. in eine alternativ/zusätzlich angebaute z.B. Gipskartonplatte oder einen Deckenputz 8 eingebaut, dargestellt
2: zweites Rohrsystem des Energiespeichers 10, welches die in einem Bauteil eines Bauwerks vorhandene Masse aktiviert und so zusätzlich als thermischen Speicher nutzt.
3: Trennlage, hier mit/ohne optionalen Rohrsystemen ausgestattet dargestellt, welches vorzugsweise auch akustisch wirksam und/oder feuchteabsorbierend ausgebildet sein kann
4: Alternativ / optional, verwendetes Rohr zur Luftführung 5, 5.1, 5.2, 5.3: Beispielhaftes, systematisch dargestelltes Profil(System). Welches, auch/und höhenverstellbar sein kann und auch/und zur Befestigung des Gesamtsystems an dem vorhandenem zu aktivierendem Bauteil genützt werden kann und/oder auch zur Aufnahme des zweiten (Speicher-) Rohrsystems dienen kann und welches, ebenfalls gleichzeitig die Befestigung der Trennlage und/oder Deckenverkleidung sein kann
7: Vorhandenes gebäudeseitiges Element, z.B. Altbestand, Bauteil. Z.B. Decke, usw.
8: Putzschicht oder/und (Decken-)Verkleidung aus bekannten Baustoffen bzw. System hergestellt welches auch, bekanntermaßen mit einem eigenem (Kapillar-) Rohrsystem ausgestattet sein kann.

An den Altbestandelement 7 (eine Decke) wird mit Befestigungsmittel 21 ein Befestigungsteil 14 befestigt, zum Beispiel angeschraubt. Das Befestigungsteil 14 besitzt eine Omega-Querschnittsfläche, die dazu ausgebildet ist, die Rohrleitung 2 aufzunehmen. Die Rohrleitung 2 ist Teil des Energiespeichers 10, zu welcher das Bestandselement 7 durch diese Sanierung aufgerüstet und aufgewertet wird. Die Anordnung des Befestigungsteiles 14 ist dabei entweder so, dass das Rohr in das Befestigungsteil 14 vormontiert ist, weil die Öffnung des Befestigungsteiles 14 dann auf der Oberfläche des Elementes 7 aufliegt, oder, wie es noch nicht gezeigt ist, die Öffnung zur Aufnahme des Rohres 2 befindet sich auf der vom Element 7 abgewandten Seite.

Mit 5.1, 5.2, 5.3 sind verschiedene Varianten des Befestigungsteiles 14 gezeigt:
5.1 zeigt das Befestigungsteil 14 Z-artig abgewinkelt, wobei beide Enden des Befestigungsteiles zur Aufnahme, Halterung eines Rohres 1,2 ausgebildet sind.
5.2 zeigt das Befestigungsteil 14 auf der Seite des Flächentemperierelementes 11 T- artig ausgebildet, ebenfalls zur Halterung eines Rohres 1.
5.3 zeigt das Befestigungsteil 14 in einer mehrteiligen Variante zur Einstellung von Abhänglängen des Flächentemperierelementes 11.

Die hier gezeigten Varianten sind zum einem eine klassische Trockenbaudecke, welche mit einer Gipskartonplatte abgeschlossen ist, in diesem Fall befindet sich die Rohrleitung 1 zumindest zur Hälfte in der Isolierung 3, was aber aufgrund der schlechten Wärmeleitung der Isolierung 3 unkritisch ist. Die andere Variante sieht eine Putzschicht 8 vor, in die die Rohrleitung 1 eingebettet ist. Das Befestigungsteil 14 ist dabei so ausgestaltet, dass es die Isolierung 3 und natürlich auch das durch die Gipskartonplatte usw. gebildete Flächentemperierelement 11 trägt bzw. hält.

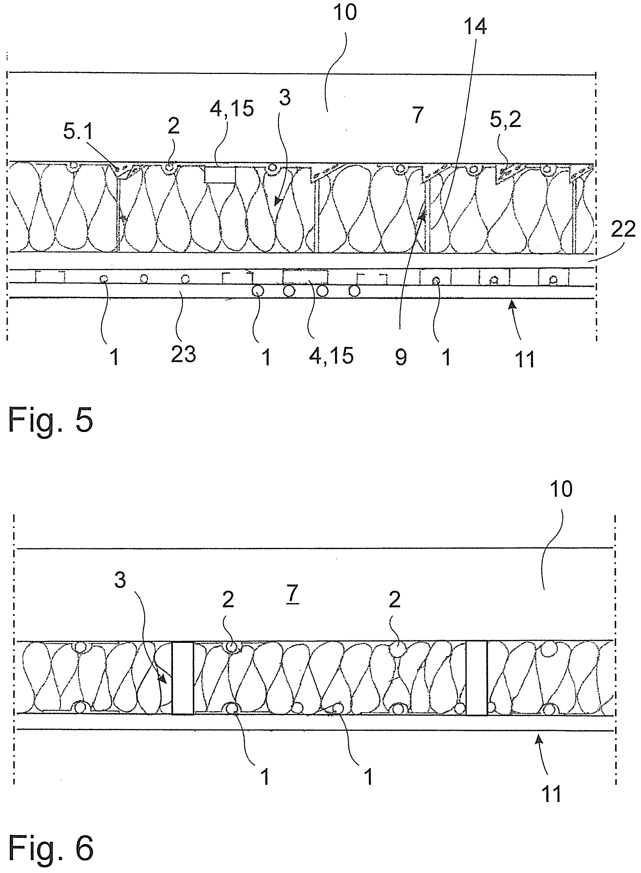

Figur 5 zeigt, wie Figur 6, als weitere beispielhafte, mindestens zwei Temperaturzonen umfassenden Lösung dargestellte multifunktionale Klimadecke. Es zeigen:
1: Oberflächennahes Rohrsystem. Hier beispielhaft als bekanntes System dargestellt.
2: zweites Rohrsystem, welches die in einem Bauteil eines Bauwerks vorhandene Masse als Energiespeicher 10 aktiviert und so zusätzlich als thermischen Speicher nutzt.
3: Trennlage, hier beispielhaft ohne weiter Funktionen dargestellt.
4: Alternativ / optional, verwendetes Rohr zur Luftführung. Hier zur Vergrößerung der Kontaktfläche als Quadratrohr dargestellt.
5, 5.2: Beispielhaftes, systematisch dargestelltes Profil(System). In welches werkseits/bauseits mindestens ein Rohr, auf der dem zu aktivierenden Bauteil zugewandten und/oder abgewandten Seite eingebaut werden kann und welches zusätzlich/optional über eine Vorrichtung zur Aufnahme bekannter, auch drucksteifer, Abhängesysteme verfügt.
7: Vorhandenes, z.B. Altbestand, Bauteil. Z.B. Decke, usw.
9: Abhänger, nach bekannter Bauart. Bevorzugt drucksteif.

Der Aufbau in Figur 5 ist mit dem in Figur 4 sehr ähnlich. Im Bereich des Flächentemperierelementes 11 ist zwischen der Gipskartonplatte 23 und der Isolierung 3 noch eine Brandschutzschicht 22 vorgesehen, die ganze Anordnung wird durch bekannte Abgänger 9 als Befestigungsteil 14 an dem Element 7 befestigt.

Figur 6 zeigt exemplarisch, beispielhafte Darstellung einer in einer bevorzugten Variante ausgeführte multifunktionale Klimadecke. Die für die Ausbildung der mindestens zwei Temperaturzonen benötigten Rohre (1 und 2) sind hier beispielhaft dargestellt, direkt in mindestens eine in der Trennlage 3 (welche aus einem bekannten Baustoff wie z.B. Glasschaum, Kalzium-Silikat-Schaum (Gasbeton) oder einem sonstigem, Werkstoff hergestellt wurde) integrierten Sicke, werkseitig/bauseits eingesetzt bzw. mit/ohne eigens dafür ausgebildete Sicke, nach bekannten Fertigungsverfahren, integriert. Auch ist, nach einem wie oben beschriebenem Verfahren, mindestens ein wärmeleitender Werkstoff (z.B. Graphit, Aluminium, Stahl oder dergl. mehr), in dem mindestens ein Rohr (für die Ausbildung von mindestens zwei Temperaturzonen) geführt wird, dargestellt.

Dabei wird in einer bevorzugten Ausbildung, die Trennlage zusätzlich akustisch wirksam und/oder feuchteabsorbierend und/oder feuerhemmend ausgebildet und mit einem z.B. akustisch wirksamen Material belegt bzw. endbehandelt.

Beispielhafte Befestigung der multifunktionalen Klimadecke. Hier als Holzkonstruktion dargestellt. Es sind jedoch alle bekannten Befestigungstechniken, wie Dübeln, Schrauben, Kleben und dergleichen mehr, möglich.

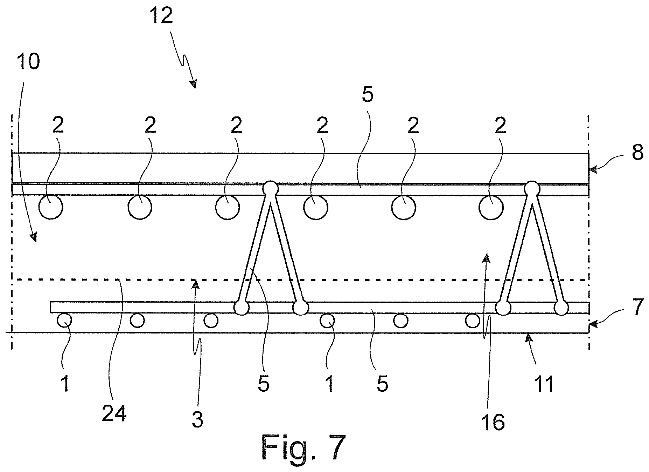

Figur 7 zeigt eine weitere erfindungsgemäße Variante. Das hier gezeigte Bauteil bzw. System 12 ist als monolithische Körper 16 konzipiert, wobei der monolithische Körper 16 zwei Materialien aufweist. Im unteren Bereich, wo das Flächentemperierelement 11 auszubilden ist, wird hier zunächst eine Schicht Leichtbeton, oder Isolierbeton verarbeitet, welcher als Dämmlage bzw. Isolierung 3 wirkt. Dieses Material zeichnet sich nämlich durch schlechte wärmetechnische Eigenschaften, wie bereits beschrieben, aus. Dabei bildet sich die Dämmlage bzw. Isolierung 3 an der Trennschicht 24 die die Leichtbeton-Schicht von der Normalbeton-Schicht abgrenzt, aus. Das hier gezeigte Bauteil besitzt eine Bewehrung 5 wie üblich. Diese kann, je nach statischer Anforderung, auch in der Schicht von Leichtbeton eingebettet sein, oder darüber, beide Varianten sind nach der Erfindung möglich.

Diese Variante erreicht bereits den erfindungsgemäßen Effekt! Dieser kann noch verbessert werden, wenn, wie in Fig.2 gezeigt, zusätzliche Verdrängungskörper 17 gerade im Bereich der Trennschicht 24 angeordnet werden, die günstigerweise auch das Gewicht eines solchen Bauteiles reduzieren.

Diese Variante ist als Ortbetondecke, als Filigranbauteil oder auch als Fertigbauteil realisierbar.

Nachfolgend werden mögliche Merkmale des Vorschlages strukturiert wiedergegeben.

Eine Ausgestaltung der Erfindung umfasst ein Bauteil, welches in allen Differenzierungen von gänzlich örtlich bis hin zum komplett werkseitig vorgefertigtem Vollmontagebauteil, bestehend aus, mit mindestens zwei voneinander, physikalisch und/oder regeltechnisch/thermisch getrennten bzw. trennbaren Zonen hergestellt wird. Dieses zeichnet sich dadurch aus, dass es sich sowohl um ein in sich geschlossenes Bauteil (z. B. Betondecke) als auch um ein, aus einem Konglomerat von mindestens zwei Bauteilen (z. B. schwimmender Estrich mit darunterliegender Betondecke) handelt, in dem/denen Temperaturzonen in welche mindestens ein mit flüssigem Medium und/oder mit mindestens ein gasförmigen Medium durchströmt Rohr geführt werden und welche(s) sowohl/als auch aktiv/passiv, thermisch beladen und/oder entladen werden können.

Ein wie zuvor ausgeführtes Bauteil, wobei mindestens eine thermische Zone eine von der/den anderen thermischen Zonen abweichende verlängerte/verkürzte Reaktionszeit, welche ihre Begründung in einem größeren/kleineren Speichervolumen hat, aufweist.

Ein wie zuvor ausgeführtes Bauteil, wobei es sich um eine Betonkernaktivierung mit thermisch davon getrennter aber im selben Bauteil angeordneter oberflächennaher, flink reagierender z. B. Heiz-/Kühldecke oder Heiz-/Kühlboden handelt.

Ein wie zuvor ausgeführtes Bauteil, wobei die thermische Trennschicht aus einem vom Baukörper abweichendem Material und/oder mindestens einem Hohlraum besteht welches(r) zusätzlich akustisch und/oder feuchtabsorbierend genutzt werden kann.

Ein wie zuvor ausgeführtes Bauteil, wobei in mindestens eine thermische Schicht, gegebenenfalls zusätzlich/alternativ ein luftführendes System eingebunden ist welches der Be-/Entladung des Bauteils dient und/oder durch verstärkte Konvektion und/oder Be-/Entladung mindestens einer thermischen Schicht, raumseitig die Leistung (auch flink und bedarfsorientiert) erhöhen und/oder für den Abtransport von in und/oder dem Rohr / der thermischen Trennschicht, welche auch separat mit einem auch eigenem Rohrsystem gekühlt werden kann, anfallender Feuchtigkeit und/oder zusätzlich/ergänzend dem Luftaustausch dienen kann.

Ein wie zuvor ausgeführtes Bauteil, wobei es sich um ein Trockenbausystem handelt welches wahlweise aus mindestens einem Profil welches aus bekannten Materialien (Stahl, Alu, Kunstsoff oder einem Konglomerat aus mehreren bekannten Werkstoffen hergestellt oder/und aus einer, auch akustisch und/oder feuchteabsorbierenden und/oder wärmeisolierenden Dämmlage aus bekannten Materialien, z. B. Glasschaum, EPS, Graphit(-Schaum) oder einem Konglomerat aus mehreren bekannten Werkstoffen und/oder Profilen dergestalt ausgebildet ist, dass sowohl auf der raumabgewandten, wie auch der raumzugewandten Seite jeweils mindestens eine thermische getrennte Zone entsteht und welches derart an der dem Raum zugewandten Seite eines Bauteils (z. B. Decke oder Wand) aufgebracht wird, dass das Bauteil selbst thermisch Be-/Entladen und der betreffende Raum beheizt/gekühlt werden kann.

Ein wie zuvor ausgeführtes Bauteil, wobei die thermisch getrennten Temperaturzonen hydraulisch mit dem Rohrsystem verbunden und in Reihe geschaltet sind.

Ein wie zuvor ausgeführtes Bauteil, wobei die thermisch getrennten Temperaturzonen hydraulisch getrennt und/oder je nach spezifischer Anforderung über zum Beispiel einen hydraulisch wirkender Pufferspeicher, welcher auch als hydraulische Weiche dienen kann, hydraulisch angesteuert werden und verbunden sind.

Ein wie zuvor ausgeführtes Bauteil, wobei die flinke Temperaturzone (das Flächentemperierelement) gleichzeitig beim Be-/Entladen der trägen Temperaturzone (des Energiespeichers) mit einem dem Nutzen der Einspeicherung entgegengesetzt abweichenden Temperatur bedient und/oder gegebenenfalls mittels technisch bekannten und zusätzlichen Pufferspeicher dergestalt angesteuert wird, dass die durch Transmission auf den flinken Bereich einwirkende Energie aufgenommen und im zusätzlichen Puffer eingespeichert wird. Die hierbei gespeicherte Energie wird zeitversetzt wieder direkt in die flinke Temperaturzone und oder durch Einleiten in die träge Temperaturzone nutzbar gemacht.

Ein wie zuvor ausgeführtes Bauteil, wobei die träge und oder flinke Temperaturzone in beliebig viele kleine Einheiten unterteilt und so einzeln und gegebenenfalls in einer bevorzugten Variante raum- und/oder bedarfsorientiert auch in verschiedenen Temperaturniveaus be- und/oder entladen werden können.

## Patentansprüche

1. Gebäude mit einem System für die Temperierung eines Raumes des Gebäudes und zur Speicherung von thermischer Energie, wobei mindestens ein aus festem Material gebildeter Energiespeicher (10) für die Speicherung der thermischen Energie und mindestens ein Flächentemperierelement (11), das dem zu temperierenden Raum zugewandt ist, für die Temperierung des Raumes vorgesehen ist und das System eine Isolierung (13) aufweist, die den Energiespeicher (10) zumindest teilweise umgibt, wobei der Energiespeicher (10) und das Flächentemperierelement (11) mindestens eine Rohrleitung (1, 2, 4) für die Leitung eines flüssigen oder gasförmigen Mediums aufweist, das dem Transport von thermischer Energie dient, der Energiespeicher (10) eine Fundamentplatte oder ein Deckenelement des Gebäudes ist, **dadurch gekennzeichnet, dass** das Material des Flächentemperierelement im Vergleich mit dem Material des Energiespeichers eine um mindestens 60% schlechtere Wärmekapazitätseigenschaft aufweist.

2. Gebäude nach Anspruch 1, **dadurch gekennzeichnet, dass** die Rohrleitung (2, 4) möglichst mittig im Energiespeicher (10) oder am Energiespeicher (10), insbesondere an seiner Oberfläche angeordnet ist.

3. Gebäude nach einem der vorhergehenden Ansprüche, **dadurch gekennzeichnet, dass** die Rohrleitung (1) im Flächentemperierelement (11) an der dem zu temperierenden Raum zugewandten Oberfläche angeordnet ist.

4. Gebäude nach einem der vorhergehenden Ansprüche, **dadurch gekennzeichnet, dass** der Energiespeicher (10) eine erste Rohrleitung (2) für ein flüssiges Medium und eine zweite Rohrleitung (4) für ein gasförmiges Medium aufweist.

5. Gebäude nach einem der vorhergehenden Ansprüche, **dadurch gekennzeichnet, dass** das System (12) zwei Flächentemperierelemente (11a, 11b) aufweist und der Energiespeicher (10) zwischen den beiden Flächentemperierelementen (11a, 11b) angeordnet ist.

6. Gebäude nach einem der vorhergehenden Ansprüche, **dadurch gekennzeichnet, dass** die Isolierung (3) zwischen Flächentemperierelement (11) und Energiespeicher (10) angeordnet ist und/oder die Isolierung (3) gebildet ist von einer Lage von Isoliermaterial und/oder Wärmestrahlung reflektierendem Material bzw. Folienmaterial.

7. Gebäude nach einem der vorhergehenden Ansprüche, **dadurch gekennzeichnet, dass** die Isolierung (3) in dem Flächentemperierelementen (11) integriert ausgebildet ist und/ oder die Isolierung (3) gebildet ist von einem Material des Flächentemperierelementes (11), das schlechtere Wärmeleiteigenschaften und/oder Wärmekapazitätseigenschaften als das Material des Energiespeichers (10) aufweist.

8. Gebäude nach einem der vorhergehenden Ansprüche, **dadurch gekennzeichnet, dass** die Isolierung (3) gebildet ist von mindestens einem Stein (13) insbesondere Baustein mit schlechteren Wärmeleiteigenschaften und/oder Wärmekapazitätseigenschaften als dem Material des Energiespeichers (10).

9. Gebäude nach einem der vorhergehenden Ansprüche, **dadurch gekennzeichnet, dass** auf oder in der Fundamentplatte oder dem Deckenelement die Rohrleitung (2) bevorzugt mit mindestens einem von der Fundamentplatte oder dem Deckenelement getragenen Befestigungsteil (14) angeordnet ist und die Isolierung (3) zwischen Energiespeicher (10) und Flächentemperierelement (11) angeordnet ist.

10. Gebäude nach Anspruch 9, **dadurch gekennzeichnet, dass** das Befestigungsteil (14) auch dazu dient, das Flächentemperierelement (11) und/oder die Isolierung (3) zu tragen und/oder das Befestigungsteil (14) auch einen Installationskanal (15) oder eine Rohrleitung (4) trägt bzw. ausbildet, insbesondere einstückig oder integriert ausbildet.

11. Gebäude nach einem der vorhergehenden Ansprüche, **dadurch gekennzeichnet, dass** die Isolierung (3) als Befestigungsteil (14) für die Rohrleitung (4) dient.

12. Gebäude nach einem der vorhergehenden Ansprüche, **dadurch gekennzeichnet, dass** das Flächentemperierelement aus Leichtbeton oder Isolierbeton besteht.

## Claims

1. Building comprising a system for temperature control of a room of the building and for storing thermal energy, at least one energy storage device (10) made of solid material being provided for storing the thermal energy and at least one surface temperature control element (11), which faces the room to be temperature-controlled, being provided for temperature control of the room and the system having insulation (13) which at least partially surrounds the energy storage device (10), the energy storage device (10) and the surface temperature control element (11) having at least one pipeline (1, 2, 4) for conveying a liquid or gaseous medium which serves to transport thermal energy, the energy storage device (10) being a foundation slab or a ceiling element of the building, **characterized in that** the material of the surface temperature control element has a heat capacity property that is at least 60% worse compared to the material of the energy storage device.

2. Building according to claim 1, **characterized in that** the pipeline (2, 4) is arranged as centrally as possible in the energy storage device (10) or on the energy storage device (10), in particular on its surface.

3. Building according to either of the preceding claims, **characterized in that** the pipeline (1) is arranged in the surface temperature control element (11) on the surface facing the room to be temperature-controlled.

4. Building according to any of the preceding claims, **characterized in that** the energy storage device (10) has a first pipeline (2) for a liquid medium and a second pipeline (4) for a gaseous medium.

5. Building according to any of the preceding claims, **characterized in that** the system (12) has two surface temperature control elements (11a, 11b) and the energy storage device (10) is arranged between the two surface temperature control elements (11a, 11b).

6. Building according to any of the preceding claims, **characterized in that** the insulation (3) is arranged between the surface temperature control element (11) and the energy storage device (10) and/or the insulation (3) is formed from a layer of insulating material and/or heat radiation reflecting material or foil material.

7. Building according to any of the preceding claims, **characterized in that** the insulation (3) is integrated into the surface temperature control element (11) and/or the insulation (3) is formed from a material of the surface temperature control element (11) that has worse heat conductivity properties and/or heat capacity properties than the material of the energy storage device (10).

8. Building according to any of the preceding claims, **characterized in that** the insulation (3) is formed from at least one stone (13) in particular a building block with worse heat conductivity properties and/or heat capacity properties than the material of the energy storage device (10).

9. Building according to any of the preceding claims, **characterized in that** the pipeline (2) is preferably arranged on or in the foundation slab or ceiling element with at least one fastening part (14) supported by the foundation slab or ceiling element and the insulation (3) is arranged between the energy storage device (10) and the surface temperature control element (11).

10. Building according to claim 9, **characterized in that** the fastening part (14) also serves to support the surface temperature control element (11) and/or the insulation (3) and/or the fastening part (14) also supports or forms an installation channel (15) or a pipeline (4), in particular in one piece or integrated.

11. Building according to any of the preceding claims, **characterized in that** the insulation (3) serves as a fastening part (14) for the pipeline (4).

12. Building according to any of the preceding claims, **characterized in that** the surface temperature control element consists of lightweight concrete or insulating concrete.

## Revendications

1. Bâtiment comportant un système pour l'équilibrage de température d'une pièce du bâtiment et pour l'accumulation d'énergie thermique, dans lequel au moins un accumulateur d'énergie (10) formé d'un matériau solide est prévu pour l'accumulation de l'énergie thermique et au moins un élément d'équilibrage de température de surface (11), lequel est tourné vers la pièce dont la température doit être équilibrée, est prévu pour l'équilibrage de température de la pièce, et le système présente une isolation (13) qui entoure au moins partiellement l'accumulateur d'énergie (10), dans lequel l'accumulateur d'énergie (10) et l'élément d'équilibrage de température de surface (11) présentent au moins une conduite (1, 2, 4) pour la conduite d'un milieu liquide ou gazeux qui sert au transport de l'énergie thermique, l'accumulateur d'énergie (10) étant une dalle de fondation ou un élément de plafond du bâtiment, **caractérisé en ce que** le matériau de l'élément d'équilibrage de température de surface présente, en comparaison avec le matériau de l'accumulateur d'énergie, une propriété de capacité thermique moindre d'au moins 60 %.

2. Bâtiment selon la revendication 1, **caractérisé en ce que** la conduite (2, 4) est disposée le plus possible au centre de l'accumulateur d'énergie (10) ou sur l'accumulateur d'énergie (10), en particulier sur sa surface.

3. Bâtiment selon l'une des revendications précédentes,
**caractérisé en ce que** la conduite (1) est disposée dans l'élément d'équilibrage de température de surface (11), sur la surface orientée vers la pièce dont la température doit être équilibrée.

4. Bâtiment selon l'une des revendications précédentes, **caractérisé en ce que** l'accumulateur d'énergie (10) présente une première conduite (2) pour un milieu liquide et une deuxième conduite (4) pour un milieu gazeux.

5. Bâtiment selon l'une des revendications précédentes, **caractérisé en ce que** le système (12) présente deux éléments d'équilibrage de température de surface (11a, 11b) et l'accumulateur d'énergie (10) est disposé entre les deux éléments d'équilibrage de température de surface (11a, 11b).

6. Bâtiment selon l'une des revendications précédentes, **caractérisé en ce que** l'isolation (3) est disposée entre l'élément d'équilibrage de température de surface (11) et l'accumulateur d'énergie (10) et/ou l'isolation (3) est formée par une couche de matériau isolant et/ou de matériau ou de matériau en feuille réfléchissant le rayonnement thermique.

7. Bâtiment selon l'une des revendications précédentes, **caractérisé en ce que** l'isolation (3) est réalisée de manière intégrée dans l'élément d'équilibrage de température de surface (11) et/ou l'isolation (3) est formée par un matériau de l'élément d'équilibrage de température de surface (11) qui présente des propriétés de conduction thermique et/ou des propriétés de capacité thermique moindre que le matériau de l'accumulateur d'énergie (10).

8. Bâtiment selon l'une des revendications précédentes, **caractérisé en ce que** l'isolation (3) est formée par au moins une pierre (13), en particulier une pierre de construction, comportant des propriétés de conduction thermique et/ou des propriétés de capacité thermique moindre que le matériau de l'accumulateur d'énergie (10).

9. Bâtiment selon l'une des revendications précédentes, **caractérisé en ce que** la conduite (2) est disposée sur ou dans la dalle de fondation ou l'élément de plafond, de préférence avec au moins une partie de fixation (14) portée par la dalle de fondation ou l'élément de plafond, et l'isolation (3) est disposée entre l'accumulateur d'énergie (10) et l'élément d'équilibrage de température de surface (11).

10. Bâtiment selon la revendication 9, **caractérisé en ce que** la pièce de fixation (14) sert également à porter l'élément d'équilibrage de température de surface (11) et/ou l'isolation (3), et/ou la pièce de fixation (14) porte ou réalise également, en particulier réalise d'une seule pièce ou de manière intégrée, un canal d'installation (15) ou une conduite (4).

11. Bâtiment selon l'une des revendications précédentes, **caractérisé en ce que** l'isolation (3) sert de pièce de fixation (14) pour la conduite (4).

12. Bâtiment selon l'une des revendications précédentes, **caractérisé en ce que** l'élément de régulation de température de surface est constitué de béton léger ou de béton isolant.
